# EUROPÄISCHE PATENTSCHRIFT

(11) **EP 1 304 251 B1**
(45) Veröffentlichungstag und Bekanntmachung des Hinweises auf die Patenterteilung: **17.09.2008**
(21) Anmeldenummer: 02021956.4
(22) Anmeldetag: 30.09.2002
(51) Int. Cl.: B60K 31/00, B60T 7/22

(54) **Geschwindigkeitsregel-System mit Abstandssensorik für ein Kraftfahrzeug**
Cruise control with interval sensing for a motor vehicle
Régulateur de vitesse avec détection d'intervalle pour véhicule à moteur

(30) Priorität: 19.10.2001 DE 10151717
(43) Veröffentlichungstag der Anmeldung: 23.04.2003
(60) Teilanmeldung: 05017567.8
(73) Patentinhaber: Bayerische Motoren Werke Aktiengesellschaft, 80809 München (DE)
(72) Erfinder: Steinle, Joachim, Dr., 80993 München (DE); Tschernoster, Oliver, 80939 München (DE); Pfeiffer, Andreas, Dr., 83607 Holzkirchen (DE)

(56) Entgegenhaltungen:
- EP-A- 0 896 896
- EP-A- 0 992 387
- EP-A- 1 195 283
- DE-A- 4 100 993
- DE-A- 19 924 142
- DE-A- 19 958 520

## Beschreibung

Die Erfindung betrifft ein Geschwindigkeitsregel-System mit Abstandssensorik für ein Kraftfahrzeug, wobei dieses System nicht nur bei höheren Fahrgeschwindigkeiten, sondern insbesondere auch im Stop&Go-Betrieb automatisch die Einhaltung eines Mindestabstands zu einem vorausfahrenden Fahrzeug, das vom System als ein Zielobjekt erkannt ist, gewährleistet. Zum bekannten Stand der Technik wird beispielsweise auf die DE 199 24 142 A, die EP 0 92 387 A und die DE 199 58 520 A1 verwiesen. Demnach sind insbesondere Geschwindigkeitsregelsysteme mit Abstandssensorik bekannt, bei denen der Fahrer nach Erreichen des Fahrzeugstillstandes durch einen automatischen Bremsvorgang zum Abgeben eines Losfahrkommandos für eine Weiterfahrt aufgefordert wird.

Kraftfahrzeuge, insbesondere PKWs, mit einem Geschwindigkeitsregel-System mit Abstandssensorik können heute bereits bei einigen Herstellern erworben werden. Ein derartiges bspw. bei der Anmelderin der vorliegenden Patentanmeldung unter der Bezeichnung "Active Cruise Control" angebotenes System ermöglicht es, das Kraftfahrzeug unter Einhaltung eines gewünschten Abstands zu einem vor diesem fahrenden Kfz (dieses wird als Zielobjekt bezeichnet) mit einer gewünschten oder einer entsprechend geringeren Geschwindigkeit automatisch zu bewegen. Vom Prinzip her ist dabei die allgemein bekannte Fahrgeschwindigkeitsregelung, die eine bestimmte vorgegebene Geschwindigkeit einhält, um eine zusätzliche Abstandsfunktion erweitert, so dass der Einsatz einer solchen "aktiven" Fahrgeschwindigkeitsreglung auch im dichten Autobahn- und Landstrassenverkehr möglich wird. Diese sog. "aktive Fahrgeschwindigkeitsregelung" hält die vorgegebene Wunschgeschwindigkeit wie der konventionelle Geschwindigkeitsregler, wenn die eigene Fahrspur frei ist. Erkennt eine am Kraftfahrzeug angebrachte Abstandssensorik, die insbesondere auf Radarbasis arbeiten kann, ein vorausfahrendes Zielobjekt bzw. (Kraft-)Fahrzeug in der eigenen Spur, so wird die eigene Geschwindigkeit an diejenige des vorausfahrenden Kfz/Zielobjekts angepasst, derart, dass eine in der "aktiven Fahrgeschwindigkeitsreglung" bzw. im entsprechenden Geschwindigkeits-Regelsystem enthaltene Abstandsregelung automatisch einen situationsgerechten Abstand zum vorausfahrenden Kfz/Zielobjekt einhält und dementsprechend die "eigene" Fahrgeschwindigkeit, d.h. diejenige des mit der sog. aktiven Fahrgeschwindigkeitsregelung ausgestatteten Fahrzeugs, verringert.

Bspw. das bei der Anmelderin der vorliegenden Patentanmeldung unter der Bezeichnung "Active Cruise Control" angebotene System ist nur in einem Geschwindigkeitsbereich von 30 - 180 km/h nutzbar, während im Geschwindigkeitsbereich unterhalb von 30 km/h dieses System nicht aktivierbar ist bzw. sich nach einem bestimmten Algorithmus automatisch abschaltet. Auch können stehende Zielobjekte - zu denen grundsätzlich ebenfalls Abstand gehalten werden muss - nicht oder nur bedingt für die Regelung verwendet werden.

Um ein Geschwindigkeitsregel-System mit Abstandssensorik auch im Geschwindigkeitsbereich unterhalb bspw. 30 km/h insbesondere in Stausituationen nutzen zu können, setzt dies einen durch zusätzliche Sensoren erweiterten Sensorsichtbereich voraus. Weiterhin sollte ein Algorithmus zwischen relevanten stehenden und fahrenden Zielobjekten differenzieren können. Eine mögliche Systemausprägung könnte darin bestehen, zwischen einem herkömmlichen Regel-Bereich, in welchem keine Reaktion auf stehende Ziele erfolgt, und einem Stop&Go-Bereich, in dem auf stehende Zielobjekte reagiert wird, zu unterscheiden. Dieser sog. Stop&Go-Bereich kann geschwindigkeitsmäßig nach oben hin durch einen Grenzwert bspw. in der Größenordnung von 30 km/h beschränkt sein.

In der eingangs genannten DE 199 58 520 A1 ist ein Geschwindigkeitsregel-Verfahren mit Abstandssensorik nach dem Oberbegriff des Anspruchs 1 beschrieben, das eine solche Unterscheidung zwischen dem üblichen Betrieb bei höheren Fahr-Geschwindigkeiten und einem speziellen Stop&Go-Betrieb für relativ geringe Fahrgeschwindigkeiten sowie den Fzg-Stillstand vornimmt und abhängig vom jeweiligen Betriebszustand auf stehende Zielobjekte entweder reagiert oder nicht reagiert. Diese Unterscheidung zwischen einem bislang üblichen Regelbereich bei höheren Fahrgeschwindigkeiten und einem sog. Stop&Go-Bereich (und damit zwischen einer Reaktion bzw. keiner Reaktion auf stehende Zielobjekte) muss jedoch dem Fahrer des Kfz's in geeigneter Weise mitgeteilt werden. Unter Umständen muss der Fahrer sogar durch eine Bedienaktion zwischen den beiden genannten Regel-Bereichen umschalten.

Eine derart gestaltete Erweiterung eines bisher üblichen (und nur bei höheren Fahrgeschwindigkeiten arbeitenden) Geschwindigkeitsregel-Systems in den unteren Geschwindigkeitsbereich (sog. Stop&Go-Betrieb) insbesondere mit einer vom Fahrer durchzuführenden Umschaltung führt jedoch schnell zu einer den Fahrer verwirrenden Vielfalt von notwendigen Bedienaktionen. Durch diese Vielfalt läuft ein Fahrer möglicherweise auch Gefahr, die Bereiche, in denen auf stehende Zielobjekte reagiert bzw. nicht reagiert wird, zu verwechseln. Bei Berücksichtigung stehender Zielobjekte besteht außerdem die Gefahr, dass bspw. aufgrund der Auswahl eines nicht relevanten Zielobjekts (z.B. ein am Straßenrand parkendes Fahrzeug, Leitplanken, etc.) eine sowohl für den Fahrer des Kfz selbst als auch für den nachfolgenden Verkehr nicht plausible Fahrzeugreaktion z.B. in Form einer unerwartet starken Verzögerung der Fahrzeug-Fortbewegung, hervorgerufen werden kann.

Eine Abhilfemaßnahme für diese geschilderte Problematik aufzuzeigen, ist Aufgabe der vorliegenden Erfindung.
Die Lösung dieser Aufgabeerfolgt durch das Verfahren nach Anspruch 1. Vorteilhafte Weiterbildungen sind Inhalt der jeweiligen Unteransprüche.

Generell wird zur Behebung der oben genannten Nachteile somit ein Geschwindigkeitsregel-System mit Abstandssensorik vorgeschlagen, das praktisch im gesamten Betriebsbereich des Kfz und insbesondere auch im Stop&Go-Betrieb arbeitet und das dabei keine für den Fahrer offensichtliche Unterscheidung zwischen verschiedenen Bereichen vornimmt. Der Fahrer muss somit nur ein einziges System mit im wesentlichen einheitlichen und insbesondere sinnvollen, klar verständlichen Verhaltensmustern bedienen. Andererseits soll systemimmanent zwischen verschiedenen Bereichen unterschieden werden, d.h. zur Steigerung der Systemsicherheit bzw. zur Vermeidung von Fehlreaktionen des Fahrers sind durchaus unterschiedliche System-Reaktionen auf bestimmte Bedingungen erwünscht, je nachdem ob das Fzg. aktuell mit höherer Geschwindigkeit gefahren wird oder sich im Stop&Go-Betrieb befindet. Vorab sei an dieser Stelle als Beispiel genannt, dass das System im Stop&Go-Betrieb ein stehendes Zielobjekt nicht vollkommen außer Acht lassen sollte, dabei jedoch nicht wie bei einem zunächst bewegten und sich dann verlangsamenden Zielobjekt reagieren darf, da dies zu unpassend starken Abbremsvorgängen führen würde. Hierauf wird später noch näher eingegangen.

Das Geschwindigkeitsregel-System mit Abstandssensorik enthält somit keine vom Fahrer zu tätigende oder zu quittierende Umschaltung zwischen dem sog. Stop&Go-Bereich und einem Bereich höherer Fahrgeschwindigkeiten, sondern es handelt sich quasi um ein durchgängiges System, das vom Fzg-Stillstand bis zur ggf. verringerten Maximalgeschwindigkeit des Fzg's reicht und das keine offensichtliche Bereichsumschaltung enthält. Dabei wird vorgeschlagen, dass die Wunsch-Geschwindigkeit wie im bekannten Stand der Technik in einem Bereich zwischen bspw. ca. 30 km/h und der (ggf. verringerten) Maximalgeschwindigkeit des Fzg's vorgegeben werden kann.

Während im bekannten Stand der Technik eine Betätigung der Betriebsbremse durch den Fahrer (also üblicherweise ein Niedertreten des Bremspedals) stets ein absolutes Abschaltkriterium für das Geschwindigkeitsregel-System ist, soll nunmehr von diesem bisherigen Prinzip abgewichen werden, wenn das Kraftfahrzeug steht, aber ansonsten betriebsbereit ist.

So soll eine Systemabschaltung bei Fzg-Stillstand aus Sicherheitsgründen nur durch eine komplexe Bedienaktion oder Handlung des Fahrers möglich sein. Eine einfache Bedienaktion könnte nämlich auch versehentlich ausgelöst werden und so einen Auffahrunfall o.ä. provozieren, insbesondere dann, wenn das eigene Kfz durch das Geschwindigkeitsregel-System (mit Abstandssensorik) im Stop&Go-Betrieb hinter einem stehenden Fahrzeug gehalten wird. Dann besteht nämlich die Gefahr, dass der Fahrer versehentlich das Bremspedal oder ein Handbedienelement des Systems (z.B. einen Aus-Schalter) berührt, woraufhin das System abschalten würde und wonach zumindest bei einem Fahrbahn-Gefälle sich das Kfz selbsttätig in Bewegung setzen könnte. In diesem Sinne noch kritischer wäre eine versehentliche Betätigung des Gaspedals (allgemein eines Lastwunschgebers), wenn hieraus eine System-Abschaltung resultieren würde. Daher soll eine System-Abschaltung lediglich ganz bewusst erfolgen können.

Eine mögliche Bedingung für eine Abschaltung des Systems durch den Fahrer im Stand und somit eine komplexe Handlung ist bspw. die Betätigung der Betriebsbremse in Kombination mit einer gleichzeitigen Betätigung eines Ein-Aus-Schalters für das Geschwindigkeitsregel-System, wobei es sich bevorzugt um ein Handbedienelement (Taste oder dgl.) handeln kann. Eine System-Abschaltung aus dem Stand heraus kann aber auch dann vorgenommen werden, wenn das Gaspedal (bzw. allg. ein vom Fahrer zu betätigender Lastwunschgeber) solange betätigt wird, bis eine gewisse Mindestgeschwindigkeit (z.B. 10 km/h) erreicht wird und/oder wenn das Gaspedal oder dgl. mindestens über eine gewisse Zeitspanne (bspw. für einige Sekunden) betätigt wurde bzw. wird. So kann eine Abschaltung des Geschwindigkeitsregel-Systems durch zufälliges Berühren des Gaspedals sicher vermieden werden.

Vom bisher üblichen absoluten Abschaltkriterium für das Geschwindigkeitsregel-System in Form einer Fahrer-Betätigung der Betriebsbremse wird auch abgewichen, wenn aus dem Fzg-Stillstand heraus bei vom Fahrer betätigter Betriebsbremse das Geschwindigkeitsregel-System vom Fahrer aktivierbar ist. Diese Aktivierung kann bevorzugt (wieder) über ein Handbedienelement erfolgen. Nach erfolgter System-Aktivierung hält das System die Betriebsbremse gespannt, so dass der Fahrer das Bremspedal oder dgl. nicht weiter gedrückt halten muss, und zwar solange, bis der Fahrer durch ein Losfahr-Kommando einen durch das System geregelten Fahrbetrieb vorgibt.

In anderen Worten ausgedrückt kann bzw. soll ein Geschwindigkeitsregel-System mit Abstandssensorik im Gegensatz zu den bisher üblichen Systemen somit auch im Stand, d.h. bei stillstehendem, dabei jedoch betriebsbereiten Kfz aktivierbar sein. Ein wesentliches Kriterium für die Betriebsbereitschaft ist bspw., dass das Fzg-Antriebsaggregat eingeschaltet, d.h. aktiv ist. Für das Ingang-Setzen des Geschwindigkeitsregel-Systems (mit Abstandssensorik) soll dann der Fahrer zunächst durch Betätigung der Fzg-Betriebsbremse das Kraftfahrzeug im Stand halten. Nach Aktivierung des Systems durch den Fahrer (bspw. durch geeignete Betätigung eines Ein-Aus-Schalters) wird durch entsprechende Ansteuerung eines Bremsaktuators oder dgl. das Kfz ohne Zutun des Fahrers weiter im Stand gehalten und zwar in jedem Fall, d.h. unabhängig davon, ob das Geschwindigkeitsregel-System ein Zielobjekt erkannt hat bzw. erkennt oder nicht, d.h. auch denn, wenn überhaupt kein Zielobjekt vorhanden ist.

Im letztgenannten Fall kann der Fahrer des Kfz über eine geeignete Anzeige und ggf. mit einem zusätzlichen Akustiksignal mitgeteilt bekommen, dass er über eine bestimmte Bedienaktion das Geschwindigkeitsregel-System zum automatischen Losfahren auffordern kann (sog. "Go Request"). Ist hingegen ein Zielobjekt vorhanden oder wird (bspw.) erkannt, dass sich ein zunächst stehendes Objekt (langsam) entfernt, so dass dieses Zielobjekt detektiert und anerkannt wird, so kann mit der Wegbewegung dieses Zielobjekts ebenso ein sog. "Go Request" ausgelöst werden, d.h. der Fahrer wird zur Abgabe eines Losfahr-Kommandos aufgefordert. Nach Ausführen einer entsprechenden Bedienaktion durch den Fahrer, d.h. nach Abgabe des Losfahr-Kommandos (bspw. in Form eines Quittierens des"Go Request"-Signals) kann dann das Geschwindigkeitsregel-System die Betriebsbremse lösen und das Kfz auf die Wunschgeschwindigkeit beschleunigen bzw. abstandsgeregelt dem registrierten Zielobjekt folgen lassen. Dabei kann das sog. Losfahr-Kommando des Fahrers darin bestehen, dass eine sog. Wiederaufnahmetaste (bzw. allg. ein Handbedienelement) oder auch der Lastwunschgeber, d.h. das Gaspedal oder dgl. betätigt wird.

Um zwischen einem unbeabsichtigtem Betätigen der genannten Wiederaufnahmetaste oder des Gaspedals und der im vorhergehenden Absatz beschriebenen Abgabe eines sog. Losfahr-Kommandos zu unterscheiden, kann man die entsprechenden vom Fahrer durchzuführende(n) Handlung(en) noch zusätzlich mit einer Mindestausführdauer koppeln, d.h. der Fahrer muss bspw. die Wiederaufnahmetaste mindestens für eine festgelegte Zeit von einigen Sekunden drücken, damit das Fahrzeug dann tatsächlich automatisch losfährt. Gleiches gilt für die Betätigung des Gaspedals oder dgl. Im übrigen kann bei einer (derartigen) System-Aktivierung im Geschwindigkeitsbereich zwischen Fzg-Stillstand und einer Grenzgeschwindigkeit, oberhalb derer das Geschwindigkeitsregel-System analog den derzeit in Serie befindlichen Systemen arbeitet, d.h. bei einer System-Aktivierung im sog. Stop&Go-Betrieb, automatisch die Wunschgeschwindigkeit auf die genannte Grenzgeschwindigkeit (bspw. 30 km/h) oder auch auf die innerorts gesetzlich zulässige Höchstgeschwindigkeit gesetzt werden.

Es ist eine weitere Logik angegeben, mit der die Sicherheit eines Geschwindigkeitsregel-Systems mit Abstandssensorik im Stop&Go-Betrieb gegenüber dem bekannten Stand der Technik gesteigert werden kann. Demnach wird in einem Fahrgeschwindigkeitsbereich zwischen dem Fzg-Stillstand und dem ggf. geringfügig reduzierten Grenzwert für höhere Fahrgeschwindigkeiten, oberhalb dessen grundsätzlich nicht auf a priori stehende Zielobjekte reagiert wird, mit Erkennen eines sich in der voraussichtlichen Fahrspur befindenden stehenden Zielobjekts eine automatische Abbremsung mit im wesentlichen konstanter Verzögerung eingeleitet. Gleichzeitig wird mit Ausnahme dieser genannten Abbremsung das Geschwindigkeits-Regelsystem abgeschaltet und der Fahrer des Fzg's eindrücklich auf diese spezielle Situation hingewiesen.

Wie eingangs bereits erwähnt wurde, besteht bei einer Berücksichtigung stehender Zielobjekte die Gefahr, dass bspw. aufgrund einer fehlerhaften Detektion oder aufgrund der Auswahl eines nicht relevanten Zielobjekts (z.B. ein am Straßenrand parkendes Fahrzeug, Leitplanken, etc.) eine sowohl für den Fahrer des Kfz's selbst als auch für den nachfolgenden Verkehr nicht plausible Fahrzeugreaktion z.B. in Form einer unerwartet starken Verzögerung der Fahrzeug-Fortbewegung, hervorgerufen wird. Daher sollten stehende Zielobjekte vom System anders behandelt werden als fahrende Zielobjekte, wobei es andererseits nicht empfehlenswert sein dürfte, im Stop&Go-Betrieb das Vorhandensein stehender Objekte vollständig zu negieren, d.h. stehende Objekte überhaupt nicht zu berücksichtigen.

Hier wird nun vorgeschlagen, im Bereich höherer Fahrgeschwindigkeiten wie bisher üblich keine stehenden Zielobjekte zu akzeptieren und im sog. Stop&Go-Betrieb, d.h. bei Fahrgeschwindigkeiten, die zu mindest geringfügig unterhalb von bspw. 30 km/h liegen, eine bestimmte System-Reaktion zu erzeugen, wenn die Wahrscheinlichkeit hoch ist, dass sich das festgestellte, von Anfang an (d.h. a priori) stehende Objekt in der eigenen Fahrspur des Kfz's mit dem Geschwindigkeitsregel-System befindet. Diese Reaktion soll erfindungsgemäß darin bestehen, dass das Kfz sicherheitshalber mit einer relativ geringen (und dabei im wesentlichen konstanten) Verzögerung abgebremst wird und dass (im wesentlichen gleichzeitig) das Geschwindigkeitsregel-System abgeschaltet wird. Selbstverständlich wird dabei die eingeleitete Verzögerung bzw. der begonnene Abbremsvorgang weiter fortgesetzt. Dabei ist es wesentlich, dass der Fahrer des Kfz auf diese Situation hingewiesen wird, d.h. dass dem Fahrer über ein Signal oder dgl. mitgeteilt wird, dass das System nicht nur ein (im Wege) stehendes Objekt erkannt hat, sondern dass sich das System selbsttätig abgeschaltet hat, so dass das weitere Fahrverhalten nurmehr alleine vom Fahrer vorgegeben wird.

Es kann dabei nur ein in der voraussichtlichen Fahrspur stehendes Zielobjekt, dem sich das Kraftfahrzeug bis zu einem gewissen Grenzabstand genähert hat, in der soeben beschriebenen Weise berücksichtigt werden, wobei die Größe dieses Grenzabstands variabel und von der aktuellen Fahrgeschwindigkeit abhängig sein kann.

Lediglich der Vollständigkeit halber sei erwähnt, dass ein sinnvoller, da relativ unkritischer Wert für die genannte im wesentlichen konstante Verzögerung in der Größenordnung von 1,5m/s² liegt. Ferner sei darauf hingewiesen, dass es für systemgesteuerte Bremsvorgänge ohne eine damit verbundene Systemabschaltung sinnvoll sein kann, wenn im Stop&Go-Betrieb höhere Beschleunigungs- und Verzögerungsgrenzen zugelassen werden als im (bislang bereits in Serie befindlichen) Fahrbetrieb mit höheren Fahrgeschwindigkeiten (in welchem grundsätzlich keine stehenden Ziel-Objekte berücksichtigt werden), da im Stop&Go-Betrieb und somit in einem relativ niedrigen Geschwindigkeitsbereich ggf. sehr schnell auf ein vorausfahrendes Fahrzeug bzw. Zielobjekt reagiert werden muss. Dabei kann durchaus ein Übergansbereich definiert werden, in dem die jeweiligen Verzögerungs-Grenzwerte etc. abhängig von der aktuellen Fahr-Geschwindigkeit kontinuierlich angepasst werden.

Mit Ausnahme der beschriebenen "Sonder-Reaktion" auf ein in der eigenen Fahrspur festgestelltes stehendes Objekt (nämlich Abbremsen mit im wesentlichen konstanter Verzögerung und Systemabschaltung) werden somit als relevante Zielobjekte nur fahrende oder losfahrende oder anhaltende Objekte akzeptiert. Bremst ein fahrendes Zielobjekt jedoch, während das mit dem erfindungsgemäßen Geschwindigkeitsregel-System ausgestattete Kfz diesem folgt, bis in den Stand, dann wird dieses Objekt ebenfalls als Zielobjekt akzeptiert. Grundsätzlich werden die angegebenen Bedienaktionen und Betriebszustände einfacher und für den Fahrer transparent. Gleichzeitig wird die Gefahr von Fehldetektionen und von nicht an die Verkehrssituation angepassten System-Reaktionen minimiert, wobei noch darauf hingewiesen sei, dass durchaus eine Vielzahl von Details abweichend von oder ergänzend zu den obigen Erläuterungen gestaltet sein kann, ohne den Inhalt der Patentansprüche zu verlassen.

## Patentansprüche

1. Verfahren für ein Geschwindigkeitsregel-System mit Abstandssensorik für ein Kraftfahrzeug, bei dem nicht nur bei höheren Fahrgeschwindigkeiten, sondern auch im Stop&Go-Betrieb automatisch die Einhaltung eines Mindestabstands zu einem vorausfahrenden Fahrzeug, das vom System als ein Zielobjekt erkannt ist, gewährleistet wird, wobei wenn das Kraftfahrzeug steht, aber ansonsten betriebsbereit ist, von dem Prinzip abgewichen wird, dass eine Betätigung der Betriebsbremse durch den Fahrer (also üblicherweise ein Niedertreten des Bremspedals) stets ein absolutes Abschaltkriterium für das Geschwindigkeitsregel-System ist, **dadurch gekennzeichnet, dass** das Geschwindigkeitsregel-System aus dem Fahrzeug-Stillstand heraus bei vom Fahrer betätigter Betriebsbremse vom Fahrer aktiviert werden kann, wonach das System die Betriebsbremse gespannt hält, bis der Fahrer durch ein Losfahr-Kommando einen durch das System geregelten Fahrbetrieb vorgibt, während zumindest bei höheren Fahrgeschwindigkeiten mit einer Betätigung der Betriebsbremse stets das System abgeschaltet wird.

2. Verfahren für ein Geschwindigkeitsregel-System nach Patentanspruch 1, **dadurch gekennzeichnet, dass** das Geschwindigkeitsregel-System nach Erreichen des Fahrzeug-Stillstands durch einen automatischen Abbrems-Vorgang nur durch eine komplexe Handlung und anders als bei höheren Fahrgeschwindigkeiten nicht durch eine einfache Bedienaktion des Fahrers abgeschaltet wird.

3. Verfahren nach Patentanspruch 2, **dadurch gekennzeichnet, dass** die komplexe Handlung des Fahrers neben der Betätigung der Betriebsbremse eine zusätzliche Fahreraktion erfordert und/oder dass eine Betätigung des Lastwunschgebers nur dann als komplexe Handlung interpretiert wird, wenn diese Betätigung über eine längere Zeitspanne oder bis zum Erreichen einer gewissen Mindestgeschwindigkeit erfolgt.

## Claims

1. A method for a cruise control system with a distance sensing system for a motor vehicle, in which the maintaining of a minimum distance from a vehicle travelling ahead, which is recognised by the system as a target object, is not only automatically ensured at relatively high travelling speeds, but also during stop and go operation, wherein, if the motor vehicle is stationary, but is otherwise ready for operation, a deviation is made from the principle that the actuation of the service brake by the driver (generally pressing down the brake pedal) is always an absolute switch-off criterion for the cruise control system, **characterised in that** the cruise control system can be activated by the driver from a vehicle standstill when the service brake is actuated by the driver, after which the system keeps the service brake tensed until the driver, by means of a drive-off command, specifies driving operation controlled by the system, while the system is always switched off at least at relatively high driving speeds on actuation of the service brake.

2. A method for a cruise control system according to claim 1, **characterised in that** the cruise control system, on reaching a vehicle standstill by an automatic braking process is switched off only by a complex action and, unlike at relatively high travelling speeds, not by a simple operating action by the driver.

3. A method according to claim 2, **characterised in that** the complex action of the driver, in addition to actuating the service brake, requires an additional driver action and/or that an actuation of the desired load sensor is only interpreted as a complex action when this actuation takes place over a relatively long time span or until a specific minimum speed is reached.

## Revendications

1. Procédé pour un système de régulation de vitesse avec des capteurs d'intervalle pour un véhicule automobile selon lequel non seulement aux vitesses de circulation élevées mais également en mode marche/arrêt, on règle automatiquement le respect d'une distance minimale par rapport au véhicule qui précède, détecté par le système comme objet cible, et si le véhicule est à l'arrêt mais par ailleurs prêt à circuler, on s'écarte du principe selon lequel l'actionnement du frein de service par le conducteur (c'est-à-dire habituellement l'enfoncement de la pédale de frein) est toujours un critère de coupure absolue du système de régulation de vitesse,
**caractérisé en ce que**
le système de régulation de vitesse peut être activé par le conducteur à partir de l'arrêt du véhicule, lorsque le frein de service est actionné par le conducteur et ainsi le système maintient le frein de service serré jusqu'à ce que par un ordre de marche, le conducteur, prédéfinisse un mode de circulation régulé par le système alors qu'au moins aux vitesses de circulation élevées, l'actionnement du frein de service coupe toujours le système.

2. Procédé pour un système de régulation de vitesse selon la revendication 1,
**caractérisé en ce qu'**
une fois le véhicule à l'arrêt, par une opération de freinage automatique, le système de régulation de vitesse ne peut être coupé que par une manoeuvre complexe et autrement qu'aux vitesses de circulation élevées, non par un simple actionnement par le conducteur.

3. Procédé pour un système de régulation de vitesse selon la revendication 2,
**caractérisé en ce que**
la manoeuvre complexe du conducteur nécessite non seulement l'actionnement du frein de service mais également une réaction supplémentaire du conducteur et/ou un actionnement du capteur de demande de charge est interprété comme manoeuvre complexe seulement si cet actionnement dure pendant un intervalle prolongé ou jusqu'à atteindre une certaine vitesse minimale.
